# EUROPÄISCHE PATENTSCHRIFT

(11) **EP 2 033 721 B1**
(45) Veröffentlichungstag und Bekanntmachung des Hinweises auf die Patenterteilung: **24.09.2014**
(21) Anmeldenummer: 08012271.6
(22) Anmeldetag: 08.07.2008
(51) Int. Cl.: B22D 19/00, B22D 19/04, B22D 19/16, E03C 1/04, B29C 39/00, B29C 39/10

(54) **Verbundgussverfahren**
Composite casting method
Procédé de fonte composite

(30) Priorität: 08.08.2007 DE 102007034414
(43) Veröffentlichungstag der Anmeldung: 11.03.2009
(73) Patentinhaber: Grohe AG, 58675 Hemer (DE)
(72) Erfinder: Mertens, Udo, 58802 Balve (DE); Stölzel, Uwe, 58710 Menden (DE)

(56) Entgegenhaltungen:
- EP-A- 1 186 982
- EP-A2- 0 950 843
- WO-A-2006/044713
- WO-A2-2006/044713
- DE-A1-102006 001 716

## Beschreibung

Die vorliegende Erfindung betrifft ein Verfahren zur Herstellung von Gusskörpern für Sanitärarmaturen gemäß Patentanspruch 1 und Gehäuse für Sanitärarmaturen gemäß dem Patentanspruch 11.

Herstellverfahren für Gusskörper, insbesondere für Sanitärarmaturen sind bekannt. Oftmals werden sie als Gussteile in Dauerformen ausgebildet, da sich diese in einfacher Weise auch mit komplizierten Formgebungen realisieren lassen. Zur Führung des Fluids innerhalb der Gussgehäuse ist es bekannt, Kanäle einzubringen, die je nach Anzahl und Anordnung der gewünschten Führungen komplizierte Gießkernformen erfordern. Zur Herstellung der Gießkerne wird Formsand mit Bindemittel versetzt in einer Kernschießmaschine mit einem bestimmten Schussdruck und einer bestimmten Schusstemperatur in eine Kernform gepresst. Nach dem Aushärten des so geformten Gusskerns wird dieser in die Gießform eingebaut. Im Anschluss an den erfolgten Abguss wird der Sand durch im Gussstück platzierte Öffnungen entfernt.

Nachteilig an den üblichen Gießverfahren ist, dass hierbei häufig dicke Wandstärken entstehen, welche aufgrund der auftretenden Belastungen gar nicht erforderlich wären. Dadurch wird zuviel Grundmaterial für den Gusskörper verbraucht, was zu hohen Material- und Produktionskosten führt. Aus der EP 0 638 381 B1 ist es bekannt, ein Gehäuse für eine hydraulische Fördereinrichtung durch ein Druckgussverfahren herzustellen, bei dem ein Druckraum durch einen in die Gießform eingebrachten und nach dem Gießen im Gehäuse verbleibenden Kern gebildet wird.

Weiterhin ist aus der DE 41 02 358 A1 bekannt, ein Formteil durch ein Druckgussverfahren herzustellen, wobei zum Erzielen von Funktionshohlräumen in dem Formteil Einlagen angeordnet werden können.

Aus der WO 2006/044713 A2 ist ein Gießverfahren mit den folgenden Schritten bekannt:
1. Füllen eines vorgeformten Hohlprofils mit einem formgebenden Material und Herstellen eines Gießkerns.
2. Einlegen des Hohlprofils mit dem erstarrten Gießkern in eine Gießform.
3. Vergießen und Herstellen eines Gehäuses, derart, dass beim Gießvorgang im Bereich von Anschlussstellen des Hohlprofils eine formschlüssige Verbindung zwischen Gehäuse und dem Hohlprofil entsteht.

Weiterhin lehrt die DE 10 2006 001 716 A1 in einer Gießform zunächst einen Grundrahmen zu gießen. Danach werden Hohlprofile oder Hohlprofile mit einem Kern in den Grundrahmen eingelegt und fixiert und anschließend der Hohlraum zwischen Grundrahmen und den Hohlprofilen mit einem weiteren Werkstoff vergossen.

Ferner ist aus der EP 1 186 982 A2 ein Gießverfahren für Armaturen bekannt, welche komplizierte Wasserführungen aufweisen. Hierbei weisen die Gießkerngeometrien aufgrund der Komplexität bestimmte Mindestwandstärken auf, die bei den in dieser Schrift offenbarten Gießvorgängen nicht weiter vermindert werden können.

Schließlich-offenbart die EP 0 950 843 A2 eine Sanitärarmatur mit einem Chassisgehäuse, wobei innerhalb des Chassisgehäuses Hohlprofile formschlüssig mit den Gehäusebauteilen verbunden sind.

Aufgabe der Erfindung ist es, ein dünnwandiges Gehäuse für Sanitärarmaturen mit Hohlräumen und/oder Kanälen zur Führung von Medien schnell und kostengünstig herzustellen und die Nachteile im Stand der Technik zu überwinden.

Diese Aufgabe wird erfindungsgemäß durch ein Verfahren der eingangs genannten Art mit den Merkmalen des Patentanspruchs 1 und durch ein Gehäuse für eine Sanitärarmatur gemäß Patentanspruch 11 gelöst. Günstige Ausgestaltungsformen sind Gegenstand von Unteransprüchen.

Demnach besteht das Wesen der Erfindung darin, bei einem Verfahren zur Herstellung von Gehäusen für Sanitärarmaturen, nacheinander folgende Schritte auszuführen. Zunächst wird ein vorgeformtes Hohlprofil in einen Gusskern eingelegt. Zur Herstellung des Gusskerns wird z.B. in einer Kernschießmaschine mit Bindemittel versetzter Formsand mit einem bestimmten Schussdruck und mit einer bestimmten Temperatur in eine Kernform gepresst. Es ist ebenfalls möglich, ein Umhüllungsmaterial z.B. Gusskeramik oder Kunststoffe zu verwenden, welches mit anderen Verfahren das Hohlprofil umhüllt und den nachfolgenden Hüll- und/oder Gießprozess übersteht. Letztendlich wird das Hohlprofil von einem geeigneten Material umhüllt und bildet die endgültige Oberflächengeometrie in etwas geschrumpfter Form ab. Anschließend kann im Bereich von Anschlussstellen des Hohlprofils eine Koppelschicht aufgetragen werden. Die Anschlussstellen ragen dabei aus der Umhüllung hervor. Daraufhin wird das umhüllte Hohlprofil in eine Gießform eingelegt. Im Anschluss daran finden die Herstellung und das Vergießen des Hohlprofils mit Umhüllung statt, derart, dass beim Gießvorgang im Bereich der Anschlussstellen ein dichter Verbund von Gusskörper und Hohlprofil entsteht. Beim Gießvorgang umschließt das Gießmaterial das Hohlprofil, wobei die Schmelztemperatur des Gießmaterials unterhalb der des Materials des Hohlprofils liegt. Dadurch wird erreicht, dass das Hohlprofil selbst nicht geschmolzen wird. Beim Gießen wird lediglich die Koppelschicht aufgeschmolzen, die somit eine dichte Verbindung zwischen Hohlprofil und Gusskörper schafft. Das Aufbringen einer Koppelschicht und das Herstellen einer mediendichten Verbindung ist jedoch nicht unbedingt notwendig. Ein geringer Spalt ist nicht grundlegend schädlich, wenn keine Mediendichtheit notwendig ist oder dieser mit einem anderen verfahren in nachhinein abgedichtet werden kann.

Eine Ausgestaltung ist nur ein vorgeformtes Hohlprofil für eine Heißwasserführung und ein vorgeformtes Hohlprofil für eine Mischwasserführung vorgesehen. Für das Kaltwasser ist lediglich ein Anschlussformteil für den hausseitigen Anschluss vorgesehen. Dies bedeutet, dass das Kaltwasser den gesamten Innenraum des Gehäuses und die übrigen Rohre der Wasserführung umströmt. Der Vorteil dieser Ausführung liegt darin, dass die Oberfläche des Gusskörpers immer kalt bleibt , auch wenn heißes und temperiertes Wasser durch die Wasserführung fließt, so dass ein so genannter "cool-touch"-Effekt bewirkt wird. Die einzelnen Hohlprofile werden hierbei vor dem Einlegen in die Gießform miteinander verbunden, so dass ein dichtes Wasserführungsmodul unabhängig vom Gehäuse hergestellt wird. Anschließend wird das Wasserführungsmodul mit einem geeigneten Umhüllungsmaterial, wie z.B. Sand, umhüllt, der die Innenkontur des Gussköpers bestimmt und die Armatur herstellt. Nach dem Gießvorgang kann das Umhüllungsmaterial durch den Anschluss für das Kaltwasser entfernt werden.
Bei dieser Ausführung ist das Anschlussstück auf der Heißwasserseite mit dem gegossenen Oberflächenhüllkörper während oder nach dem Gießvorgang zu dichten.
Eine weitere Ausgestaltung der Erfindung sieht vor, dass zusätzlich ein vorgeformtes Hohlprofil für eine Kaltwasserführung angeordnet ist. Diese Ausbildung hat den Vorteil, dass alle Medienführungen aus Hohlprofilen gestaltet werden können und die Wasserführung so unabhängig vom Oberflächenhüllkörper ist. Durch die Trennung von Medienwegen und Oberflächenhüllkörper entsteht der Vorteil, dass die Medienführung materialseitig optimal auf das Medium angepasst werden kann und negative Einflüsse auf das durchströmte Medium vermieden werden können.
Im vorliegenden Fall kann beim Gießvorgang ein vollständig geschlossener Körper hergestellt werden. Der Formsand aus dem Gusskern kann dabei auch im Gusskörper verbleiben. Auf diese Weise wird vermieden, dass Reste des Formsands bei der späteren Bearbeitung und Beschichtung in die Galvanisierungsbäder etc. eingebracht werden und zusätzlich eine nach außen temperaturisolierende Wirkung haben.

Ferner ist bevorzugt ein vorgeformtes Hohlprofil oder ein Formstück zur Aufnahme von Funktionselementen, insbesondere eine Misch- oder Thermostatkartusche, vorzusehen. Alle Hohlprofile können z.B. mittels Tiefziehen, Rohrformens oder Heatforming hergestellt sein. Speziell ein Herstellverfahren mittels Heatforming bietet dabei den Vorteil, dass die Funktionselemente nach dem Herstellverfahren des Körpers exakt eingepasst werden können. Der Oberflächenhüllkörper für die Sanitärarmatur stellt bei dieser Ausführung lediglich noch eine Gehäuse oder eine Hülle für die Wasserführung dar und gibt der Armatur ihre äußere Kontur. Dadurch kann die Dicke des Gehäuses stark reduziert werden, was zu einer enormen Materialersparnis führt.

Gemäß einer vorteilhaften Weiterbildung können die Hohlprofile, die für die Wasserführungen vorgesehen sind, bereits vor dem Gießvorgang die erforderlichen Anschlussgeometrien, insbesondere Gewinde, aufweisen. Dadurch wird keine mechanische Nachbearbeitung der gesamten Armatur mehr erforderlich.
Zur Lösung der Aufgabe ist weiterhin gemäß Anspruch 11 ein Gehäuse für eine Sanitärarmatur vorgesehen, wobei in dem Körper eine Heiß- und eine Mischwasserführung aus vorgeformten Hohlprofilen angeordnet sind. Die vorgeformten Hohlprofile werden mit Umhüllungsmaterial vor dem Gießvorgang in eine Gießform eingelegt.

Die Erfindung sieht vor, dass die Hohlprofile form- mit dem Gusskörper verbunden sind. Bei dieser Art der Herstellung sind die Hohlprofile mit Umhüllungsmaterial bereits vor dem Gießvorgang in dem Gusskörper eingelegt. Wenn keine Koppelschicht auf den Hohlprofilen aufgetragen wird, wird durch den Gießvorgang eine formschlüssige Verbindung erzielt, bei Auftragen einer Koppelschicht und bei Aufschmelzen dieser Schicht wird eine stoffschlüssige Verbindung zwischen Hohlprofil und Gusskörper erzielt.

Vorteilhafterweise sind im Gehäuse ebenfalls Aufnahmen von Funktionselementen, insbesondere von Misch- oder Thermostatkartuschen vorgesehen. Diese können mittels mechanischer Bearbeitung durch Bohren und Fräsen in das Gehäuse eingebracht oder ebenfalls mittels vorgeformter Hohlprofile oder Formstücke in den Gusskörper eingebaut werden. Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Anhand der Figuren soll die Erfindung näher beschrieben werden. Es zeigen
- Fig. 1: eine erste Wasserführung aus vorgeformten Hohlprofilen und Formstücken in Explosionsdarstellung;
- Fig. 2: eine Rückansicht der Wasserführung aus Fig. 1 in zusammengebautem Zustand;
- Fig. 3: eine Ansicht einer Sanitärarmatur mit einem erfindungsgemäßen Gehäuse und eingebundener Wasserführung;
- Fig. 4: einen Schnitt entlang der Linie IV-IV durch die Armatur aus Fig. 3;
- Fig. 5: einen Schnitt entlang der Linie V-V durch die Armatur aus Fig. 3;
- Fig. 6: eine zweite Wasserführung aus vorgeformten Hohlprofilen und Formstücken in Explosionsdarstellung;
- Fig. 7: einen Schnitt entlang der Linie VII-VII durch eine Wannenarmatur gemäß Fig. 8;
- Fig. 8: eine Ansicht einer Wannenarmatur mit einem erfindungsgemäßen
- Fig. 9: Gehäuse und eingebundener Wasserführung; einen Schnitt entlang der Linie IX-IX durch die Armatur aus Fig. 8;
- Fig. 10: einen Schnitt entlang der Linie X-X durch die Armatur aus Fig. 8.

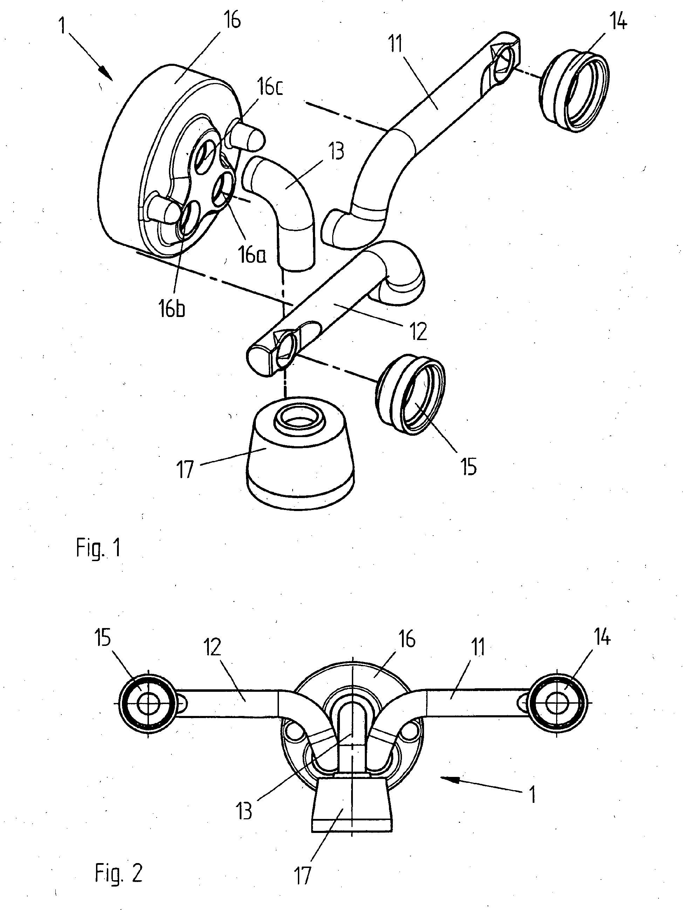

Figur 1 zeigt die Einzelteile einer ersten Wasserführung 1 beispielsweise für eine Einhebel-Brausearmatur. Die Wasserführung 1 umfasst ein Anschlussformteil 14 für einen Heißwasseranschluss und ein Anschlussformteil 15 für einen Kaltwasseranschluss. Die beiden Anschlussformteile 14, 15 weisen auf der einen Seite eine Innengeometrie zur Verbindung an hausseitige Wasseranschlüsse und eine Außengeometrie zur Anbindung an einen Gusskörper für ein Gehäuse auf. Auf der gegenüberliegenden Seite sind die Anschlussformteile 14, 15 so geformt, dass sie mit einem vorgeformten Hohlprofil 11, 12, das als Wasserweg für Heißwasser bzw. Wasserweg für Kaltwasser dient, dichtend verbunden werden können. Die Wasserwege 11, 12, die im vorliegenden Fall aus bereits vorgebogenen Rohren bestehen, weisen radiale Einlässe zur Verbindung mit den Anschlussformteilen 14, 15 auf. Dazu sind die Rohre im Bereich der Verbindungsstelle abgeflacht, was die Anordnung von Dichtmittel und eine fluiddichte Verbindung vereinfacht. Als Alternative können die Rohre auch eine weitere Krümmung aufweisen und axial mit dem Anschlussformteil verbunden werden.
Sowohl der Wasserweg für Heißwasser 11 als auch der Wasserweg für Kaltwasser 12 mündet in ein weiteres Formstück 16, das zur Aufnahme eines Funktionsbauteils, in diesem Fall eine Mischkartusche vorgesehen ist. Dazu weist das Formstück 16 drei Öffnungen 16a, 16b, 16c nämlich einen Heiß-16a und einen Kaltwassereinlass 16b sowie einen Mischwasserauslass 16c auf. Ein Wasserweg 13 für Mischwasser verbindet daher den Mischwasserauslass 16c mit einem weiteren Formstück für den Auslauf 17.
Figur 2 zeigt die fertig montierte und zusammengefügte Wasserführung 1 von hinten. In diesem Zustand wird die Wasserführung 1 in einen Sandkern eingeschossen bzw. der Sandkern um die Wasserführung 1 herum verpresst und anschließend in eine Gießform eingelegt. Daraufhin werden die Koppelstellen an den Anschlussformteilen 14, 15, dem Auslauf 17 und dem Formstück 16 mit einer Koppelschicht, beispielsweise einem Hartlot versehen. Danach folgt der übliche Gussvorgang zur Herstellung eines zugehörigen Gehäuses 2.

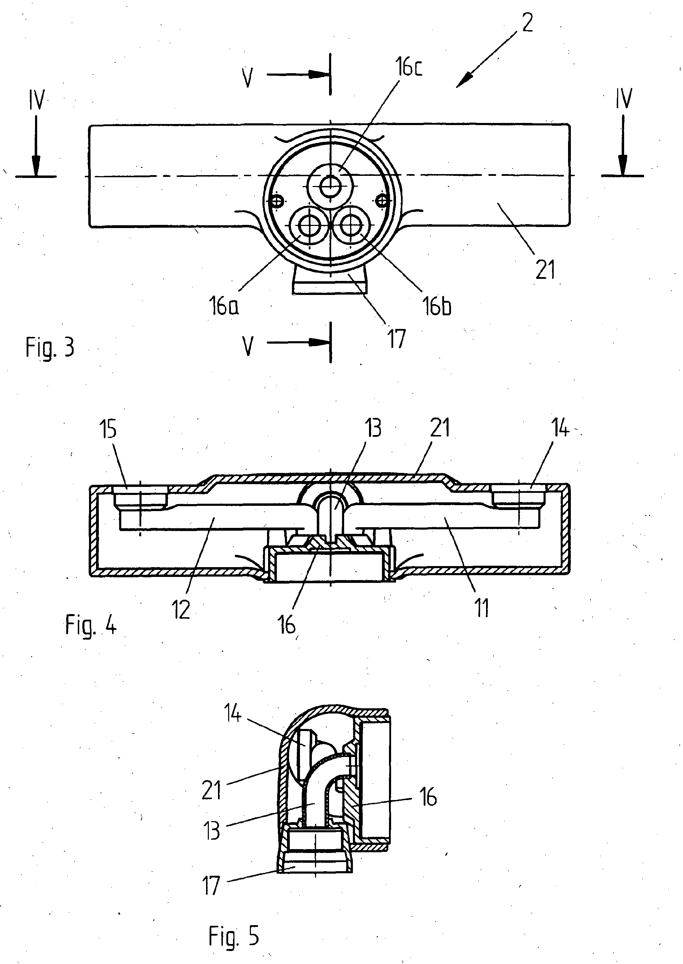

Figur 3 zeigt in einer Ansicht die kompakte Form der Sanitärarmatur. Das Gehäuse 2 weißt lediglich eine Öffnung zum Einsetzen einer Ventilkartusche und eine Öffnung für den Auslauf auf. Im vorliegenden Fall verbleibt daher der Sandkern nach dem Gießen im Gehäuse. Da dieses an den Anschlussstellen dicht verschlossen ist, kann der Sand nicht mehr austreten und verbleibt als Dämmschicht im Gehäuse. Alternativ dazu kann der Sandkern auch über eine Bohröffnung nach dem Gießen entfernt werden.
In den Schnitten der Figuren 4 und 5 wird die einfache Gestaltung des Innenraums des Gusskörpers deutlich, wobei für die Außenkontur alle Ausgestaltungen möglich sind. Das Gehäuse 2 weist letztlich nur noch eine dünne Außenhülle auf, in die die Anschlussformteile 14, 15 und Formstücke 16, 17 stoffschlüssig eingebunden sind.

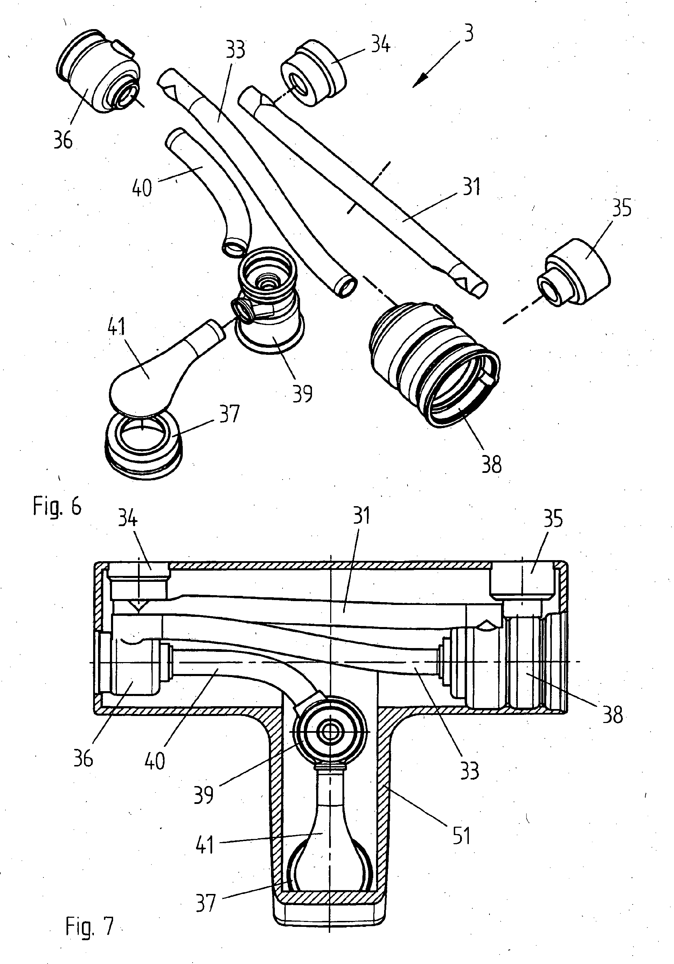

Figur 6 zeigt die Einzelteile einer zweiten Wasserführung 3 für eine Wannenarmatur. Die Wasserführung 3 umfasst wiederum ein Anschlussformteil 34 für einen Heißwasseranschluss und ein Anschlussformteil 35 für einen Kaltwasseranschluss. Während das Anschlussformteil 34 für Heißwasser in einen Wasserweg 31 für Heißwasser mündet, der aus einem Rohr mit radialen Ein- und Auslässen besteht, mündet das Anschlussformteil 35 für Kaltwasser direkt in einem Formstück 38 für ein Thermostatelement. Das Formstück 38 weist neben den beiden Einlässen für Kalt- und Heißwasser einen Auslass für Mischwasser auf, das mittels eines Wasserwegs 33 einem Formstück 36 für ein Absperrventil zugeführt wird. Von da gelangt es durch ein weiteres gekrümmtes Rohr 40 über ein Formteil 39 für eine Umstellung zum Auslauf 37.

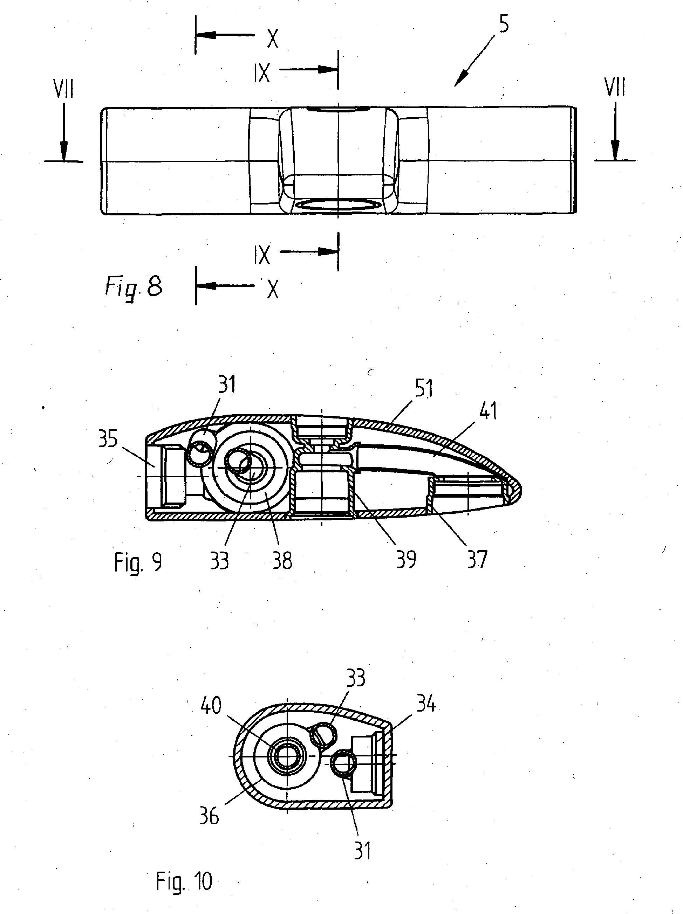

Figur 8 zeigt in einer Ansicht die kompakte Form der Sanitärarmatur. Das Gehäuse weist lediglich eine Öffnung zum Einsetzen einer Umstellvorrichtung und eine Öffnung für den Auslauf auf.
In den Schnitten der Figuren 7, 9 und 10 wird deutlich, wie komprimiert die Wasserführung mit Hilfe der Formstücke und Hohlprofile angeordnet werden und dabei an die Geometrie der Gehäuse angepasst werden kann.

Bezugszeichenliste
- 1: erste Wasserführung
- 11: Wasserweg Heißwasser
- 12: Wasserweg Kaltwasser
- 13: Wasserweg Mischwasser
- 14: Anschlussformteil Heißwasseranschluss
- 15: Anschlussformteil Kaltwasseranschluss
- 16: Formstück Funktionsbauteil
- 17: Auslauf
- 2: Sanitärarmatur
- 21: Gehäuse
- 3: zweite Wasserführung
- 31: Wasserweg Heißwasser
- 33: Wasserweg Mischwasser
- 34: Anschlussformteil Heißwasseranschluss
- 35: Anschlussformteil Kaltwasseranschluss
- 36: Formstück für Oberteil
- 37: Auslauf
- 38: Formstück für Thermostatelement
- 39: Formstück für Umstellung
- 40: Wasserweg Mischwasser
- 41: Verbindungsteil
- 5: Wannenarmatur
- 51: Gehäuse

## Patentansprüche

1. Verfahren zur Herstellung von Gehäusen für Sanitärarmaturen mit den Schritten
- wenigstens teilweise Umhüllung eines vorgeformten Hohlprofils (11-16, 31-41) mit einem formgebenden Umhüllungsmaterial,
- Einliegen des Hohlprofils (11-16, 31-41) mit dem Umhüllungsmaterial in eine Gießform,
- Vergießen und Herstellen eines Gehäuses (2, 5), derart, dass beim Gießvorgang im Bereich von Anschlussstellen des Hohlprofils eine formschlüssige Verbindung zwischen Gehäuse und dem Hohlprofil (11-16, 31-41) entsteht.

2. Verfahren gemäß Anspruch 1, **dadurch gekennzeichnet, dass** nach der Umhüllung des Hohlprofils im Bereich der Anschlussstellen des Hohlprofils eine Koppelschicht aufgebracht wird, derart dass beim Vergießen und Herstellen des Gehäuses eine stoffschlüssige Verbindung zwischen Gehäuse und Hohlprofil entsteht.

3. Verfahren gemäß Anspruch 1 oder 2, **dadurch gekennzeichnet, dass** ein vorgeformtes Hohlprofil für eine Mischwasserführung (13, 33, 40) vorgesehen ist.

4. Verfahren gemäß einem der vorhergehenden Ansprüche, **dadurch gekennzeichnet, dass** ein vorgeformtes Hohlprofil für eine Heißwasserführung (11, 31) und ein vorgeformtes Hohlprofil für eine Mischwasserführung (13, 33, 40) vorgesehen sind.

5. Verfahren gemäß Anspruch 3 oder 4, **dadurch gekennzeichnet, dass** zusätzlich ein vorgeformtes Hohlprofil für eine Kaltwasserführung (12) vorgesehen ist.

6. Verfahren gemäß einem der Ansprüche 3 bis 5, **dadurch gekennzeichnet, dass** zusätzlich ein Formstück (16, 38, 39) zur Aufnahme von Funktions-elementen, insbesondere für eine Mischkartusche oder ein Thermostatelement vorgesehen ist.

7. Verfahren gemäß einem der Ansprüche 1 bis 6, **dadurch gekennzeichnet, dass** das Hohlprofil oder die Hohlprofile (11-16, 31-41) mittels Tiefziehen, Rohrformens oder Heatforming hergestellt sind.

8. Verfahren gemäß einem der Ansprüche 1 bis 7, **dadurch gekennzeichnet, dass** das Hohlprofil oder die Hohlprofile (11-16, 31-41) bereits vor der Herstellung des Gehäuses Anschlussgeometrien für Wasseranschlüsse oder Wasserleitungen aufweisen.

9. Verfahren gemäß einem der Ansprüche 1 bis 8, **dadurch gekennzeichnet, dass** das Gehäuse (2, 5) aus Metall, Kunststoff oder Keramik hergestellt wird.

10. Verfahren gemäß einem der Ansprüche 1 bis 9, **dadurch gekennzeichnet, dass** das Hohlprofil oder die Hohlprofile (11-16, 31-41) aus Metall, Kunststoff oder Keramik vorgesehen sind.

11. Gehäuse (2, 5) für Sanitärarmatur, **dadurch gekennzeichnet, dass** in dem gegossenen Gehäuse (2, 5) eine Wasserführung aus vorgeformten Hohlprofilen (11, 13, 31, 33, 40, 41) vorgesehen ist, wobei die Hohlprofile (11, 13, 31, 33, 40, 41) durch Giessen formschlüssig mit dem Gehäuse (2, 5) verbunden sind.

12. Gehäuse (2, 5) gemäß Anspruch 11, **dadurch gekennzeichnet, dass** zusätzlich zur Wasserführung (11, 13, 31, 33, 40, 41) im Gehäuse ein Formstück zur Aufnahme von Funktionselementen (16, 36, 37, 38), insbesondere für eine Misch- oder Thermostatkartusche vorgesehen ist.

13. Gehäuse gemäß Anspruch 12, **dadurch gekennzeichnet, dass** das Formstück zur Aufnahme von Funktionselementen (16, 36, 37, 38) aus einem vorgeformten Hohlprofil vorgesehen ist.

14. Gehäuse gemäß einem der Ansprüche 11 bis 13, **dadurch gekennzeichnet, dass** die vorgeformten Hohlprofile (11, 12, 13, 31, 33, 40, 41) aus Metall, Kunststoff oder Keramik vorgesehen sind.

## Claims

1. Method of producing housings for sanitary fittings, having the steps of
- at least partly encasing a pre-formed hollow-section member (11-16, 31-41) with a modelling encasing material,
- inserting the hollow-section member (11-16, 31-41) together with the encasing material into a casting mould,
- casting and producing a housing (2, 5) in such a way that, in the casting process, in the region of connection locations of the hollow-section member, an interlocking connection between the housing and the hollow-section member (11-16, 31-41) is produced.

2. Method according to claim 1, **characterised in that**, after encasing the hollow-section member, a coupling layer is applied in the region of the connection locations of the hollow-section member in such a way that, in the casting and production of the housing, a material-bonded connection between the housing and the hollow-section member is produced.

3. Method according to claim 1 or 2, **characterised in that** a pre-formed hollow-section member is provided for a mixed water conduit (13, 33, 40).

4. Method according to one of the preceding claims, **characterised in that** a pre-formed hollow-section member is provided for a hot water conduit (11, 31) and a pre-formed hollow-section member is provided for a mixed water conduit (13, 33, 40).

5. Method according to claim 3 or 4, **characterised in that**, in addition, a pre-formed hollow-section member is provided for a cold water conduit (12).

6. Method according to one of claims 3 to 5, **characterised in that**, in addition, a fitting (16, 38, 39) for accommodating functional elements, especially for a mixing cartridge or a thermostat element, is provided.

7. Method according to one of claims 1 to 6, **characterised in that** the hollow-section member or hollow-section members (11-16, 31-41) are produced by means of deep-drawing, tube-forming or heat-forming.

8. Method according to one of claims 1 to 7, **characterised in that** the hollow-section member or hollow-section members (11-16, 31-41) already have connection geometries for water connections or water lines before production of the housing.

9. Method according to one of claims 1 to 8, **characterised in that** the housing (2, 5) is made from metal, plastics or ceramics.

10. Method according to one of claims 1 to 9, **characterised in that** hollow-section member(s) (11-16, 31-41) made from metal, plastics or ceramics are provided.

11. Housing (2, 5) for a sanitary fitting, **characterised in that** in the cast housing (2, 5) there is provided a water conduit of pre-formed hollow-section members (11, 13, 31, 33, 40, 41), the hollow-section members (11, 13, 31, 33, 40, 41) being connected to the housing (2, 5) by casting in an interlocking connection.

12. Housing (2, 5) according to claim 11, **characterised in that**, in addition to the water conduit (11, 13, 31, 33, 40, 41), there is provided in the housing a fitting for accommodating functional elements (16, 36, 37, 38), especially for a mixing or thermostat cartridge.

13. Housing according to claim 12, **characterised in that** a fitting for accommodating functional elements (16, 36, 37, 38) made from a pre-formed hollow-section member is provided.

14. Housing according to one of claims 11 to 13, **characterised in that** pre-formed hollow-section members (11, 12, 13, 31, 33, 40, 41) made from metal, plastics or ceramics are provided.

## Revendications

1. Procédé de fabrication de corps de robinetterie d'eau sanitaire comportant les étapes suivantes :
- envelopper au moins en partie un profil creux préformé (11-16, 31-41) avec une matière-enveloppe réalisant une forme,
- placer le profil creux (11-16, 31-41) avec la matière-enveloppe dans un moule de fonte,
- couler et réaliser le corps (2, 5) de façon qu'au cours de l'opération de coulée, dans la région des emplacements de branchement du profil creux, il se réalise une liaison par la forme entre le corps et le profil creux (11-16, 31-41).

2. Procédé selon la revendication 1,
**caractérisé en ce qu'**
après avoir enveloppé le profil creux, dans la région des emplacements de raccordement du profil creux, on applique une couche de couplage de façon qu'à la coulée et à la réalisation du corps, il se réalise une liaison par la matière entre le corps et le profil creux.

3. Procédé selon la revendication 1 ou 2,
**caractérisé en ce qu'**
on utilise un profil creux préformé pour un passage d'eau mélangée (13, 33, 40).

4. Procédé selon l'une des revendications précédentes,
**caractérisé en ce qu'**
on a un profil creux préformé pour un passage d'eau chaude (11-31) et un profil creux préformé pour un passage d'eau mélangée (13, 33, 40).

5. Procédé selon la revendication 3 ou 4,
**caractérisé en ce qu'**
en plus on a un profil creux préformé pour un passage d'eau froide (12).

6. Procédé selon l'une des revendications 3 à 5,
**caractérisé en ce qu'**
en plus, on a une pièce de forme (16, 38, 39) pour recevoir des éléments fonctionnels notamment une cartouche de mélangeur ou un élément thermostatique.

7. Procédé selon l'une des revendications 1 à 6,
**caractérisé en ce qu'**
on réalise le profil creux ou les profils creux (11-16, 31-41) par emboutissage profond, formage tubulaire ou formage à chaud.

8. Procédé selon l'une des revendications 1 à 7,
**caractérisé en ce que**
le profil creux ou les profils creux (11-16, 31-41) ont des géométries de branchement pour des raccords d'eau ou des conduites d'eau avant la réalisation du corps.

9. Procédé selon l'une des revendications 1 à 8,
**caractérisé en ce que**
le corps de robinet (2, 5) est en métal, en matière plastique ou en céramique.

10. Procédé selon l'une des revendications 1 à 9,
**caractérisé en ce que**
le profil creux ou les profils creux (11-16, 31-41) sont en métal, en matière plastique ou en céramique.

11. Corps (2, 5) de robinetterie d'eau sanitaire,
**caractérisé en ce que**
le boîtier coulé (2, 5) comporte un passage d'eau réalisé avec des profils creux préformés (11, 13, 31, 33, 40, 41), les profils creux (11, 13, 31, 33, 40, 41) étant réalisés par coulée pour une liaison par la forme avec le corps (2, 5).

12. Corps (2, 5) selon la revendication 11,
**caractérisé en ce qu'**
en plus des conduites d'eau (11, 13, 31, 33, 40, 41) dans le boîtier on a prévu une pièce de forme pour recevoir des éléments fonctionnels (16, 36, 37, 38), notamment pour une cartouche de mélangeur ou de thermostat.

13. Corps selon la revendication 12,
**caractérisé en ce que**
la pièce de forme pour recevoir les éléments fonctionnels (16, 36, 37, 38) est un profil creux préformé.

14. Corps selon l'une des revendications 11 à 13,
**caractérisé en ce que**
les profils creux préformés (11, 12, 13, 31, 33, 40, 41) sont en métal, en matière plastique ou en céramique.
